# EUROPEAN PATENT SPECIFICATION

(11) **EP 0 816 646 B1**
(45) Date of publication and mention of the grant of the patent: **06.02.2002**
(21) Application number: 97304799.6
(22) Date of filing: 02.07.1997
(51) Int. Cl.: F01N 3/02

(54) **Reverse cleaning regeneration type exhaust emission control device and method of regenerating the same**
Abgasemissionssteuerungssystem mit Regeneration mittels Rückspülung und Verfahren zum Regenerieren desselben
Dispositif de commande d'émissions d'échappement du type à régénération par lavage à contre-courant et méthode pour le régénérer

(30) Priority: 02.07.1996 JP 19285296
(43) Date of publication of application: 07.01.1998
(73) Proprietor: IBIDEN CO., LTD., Ogaki-shi Gifu-ken 503 (JP)
(72) Inventor: Shimato, Koji, c/o Ibiden Co., Ltd, Ibi-Gun, Gifu Pref., (JP); Naruse, Kazuya c/o Ibiden Co., Ltd, Ibi-Gun, Gifu Pref., (JP); Yamamura, Norihiko, c/o Ibiden Co., Ltd., Ibi-Gun, Gifu Pref., (JP); Demati, Hiroshi, c/o Ibiden Co., Ltd., Ibi-Gun, Gifu Pref., (JP); Naiki, Takaya, c/o Ibiden Co., Ltd., Ibi-Gun, Gifu Pref., (JP)
(74) Representative: Neobard, William John

(56) References cited:
- EP-A- 0 308 972
- EP-A- 0 674 098
- DE-A- 4 428 214
- DE-C- 4 201 402
- PATENT ABSTRACTS OF JAPAN vol. 095, no. 008, 29 September 1995 & JP 07 119441 A (HINO MOTORS LTD), 9 May 1995,
- PATENT ABSTRACTS OF JAPAN vol. 016, no. 498 (M-1325), 15 October 1992 & JP 04 183917 A (HINO MOTORS LTD), 30 June 1992,
- PATENT ABSTRACTS OF JAPAN vol. 095, no. 006, 31 July 1995 & JP 07 071226 A (NIPPON SOKEN INC), 14 March 1995,

## Description

### BACKGROUND OF THE INVENTION

### Field of the Invention

This invention relates to an exhaust emission control device for removing particulate from an exhaust stream discharged from an internal combustion engine, and more particularly to a reverse cleaning regeneration type exhaust emission control device capable of continuously conducting regeneration of filters for the removal of particulate and a method of regenerating the same.

### Description of Related Art

Recently, there becomes a problem that particulate emissions including in an exhaust stream discharged from an internal combustion engine for use in vehicles such as truck, bus and the like or construction machines harmfully exert upon environment and human body.

Therefore, an exhaust emission control device provided with a filter is arranged in an exhaust emission path extending from the internal combustion engine to catch and remove particulate included in the exhaust emission through the filter.

In the exhaust emission control device, it is necessary to take out the caught particulate from the filter and regenerate the filter. As a method of regenerating the filter, there has hitherto been known a method of burning out the particulate by directly feeding heat to the filter. In this method, however, there was caused a problem that the filter was fused by combustion heat of the particulate or broken by heat stress.

As a method of regenerating the filter without burning the particulate, there is known a reverse cleaning regeneration system in which a high-speed gas stream is supplied in a direction opposite to the flowing of the exhaust stream to remove out the particulate from the filter and then the removed particulate is burnt out in another container by using an electric heater.

When using such a reverse cleaning regeneration system, it is not required to directly feed high heat for regeneration to the filter, so that the breakage of the filter due to heat stress is not caused, and ash is not deposited on the filter, and the clogging in the filter is hardly caused.

However, if such a series of actions is carried out in a single filter, a back pressure in the exhaust emission path rises in the course of removing the particulate, which badly affects the operability of such a system.

For this end, there is proposed a method of using a pair of filters and alternately regenerating them (Nippon Hakuyo Kikan Gakkaishi, vol. 27, No. 6, pp1992-1996).

In the latter method, as shown in Fig. 1, the reverse cleaning regeneration type exhaust emission control device comprises a pair of filters 1 and 4, in which exhaust emission (shown by arrow) passes through the filters 1 and 4 at a steady state. If it is intended to regenerate the filter 1, as shown in Fig. 2, a valve 2 disposed between the filter 1 and a discharge port is closed to prevent the flowing of air for regeneration to the discharge port. Then, as shown in Fig. 3, compression air is jetted through a nozzle 3 in a moment to conduct the removal of the particulate caught by the filter 1 and the regeneration of the filter 1. After the regeneration of the filter 1, as shown in Fig. 4, the valve 2 is again opened to conduct the usual removal of the particulate using the two filters 1 and 4.

During the above regeneration of the filter 1, the exhaust emission always passes through the filter 4, so that the removal of the particulate is continuously conducted.

The regeneration of the filter 4 is carried out in the same manner as in the regeneration of the filer 1 by using a valve 5 and a nozzle 6.

The above exhaust emission control device using the two filters can continuously conduct the reverse cleaning while continuing the removal of the particulate, so that it is possible to apply such a device to trucks running over a long distance and an internal combustion engine continuously operating in an unventilatable place for a long time.

Moreover, the working of the conventional reverse cleaning regeneration type exhaust emission control device was stopped by stopping the flow of the exhaust emission accompanied with the stop of the internal combustion engine. As a result, the burning of the particulate removed out from the filter is frequently stopped on the way, so that when the flowing of new exhaust emission is started at a state of leaving the particulate, there are caused problems that the efficiency of removing the particulate becomes bad and the pressure loss undesirably rises and the like.

Another prior document, DE-A-4428214 discloses a reverse cleaning regeneration type exhaust emission control device having two exhaust emission paths each containing a filter. A regeneration container is disposed so that during regeneration of one main filter, particulate material enters the regeneration container and, in the main, falls into a collecting location. Some of the material is however entrained in the regeneration flow and this is in turn collected by the regeneration filter. A further regenerating air flow is used to blow back particulate material from the regeneration filter.

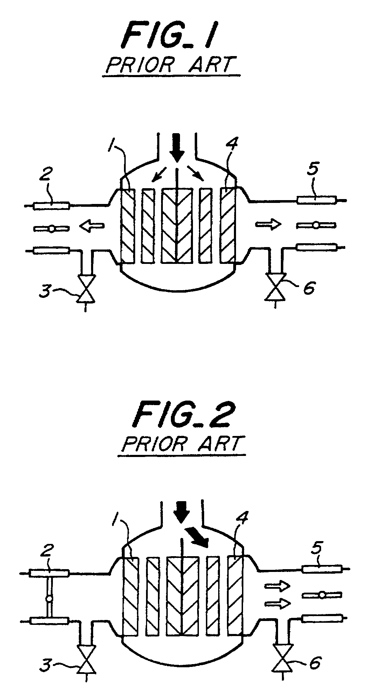

DE 44 28 214 A , fig. 1 discloses a reverse cleaning regeneration type exhaust emission control device comprising two exhaust emission routes communicated with an inlet port (between valves 18,20) of an exhaust emission and comprised of
a first path A comprising a filter A1 = 2 , a valve (at 54/16) arranged downstream of the filter A1 =2 for shutting off exhaust emission and a nozzle 54 disposed between the filter A1 and the valve (in its closed position) jetting reverse cleaning air to the filter A1 and
a second path B comprising a filter B1 = 4, a valve B2 (at 54) arranged at a downstream side of the filter B1 shutting off exhaust emission and a nozzle B3=54 disposed between the filter B1 and the valve B2 for jetting reverse cleaning air to the filter B1,
the arrangement also includes a third path C (e.g. from 24 through filter 6, vessel 26/27 and line(s) 8,10,12) arranged at an upstream side of the filters 2,4 (A1 and B1) - formed separately from the exhaust emission path extending from the inlet port of the exhaust emission and communicating (by the valves 19/21) with the two exhaust emission routes
and comprising a filter C1=6 and a valve C2 (shown at 63 closing off either nozzle 63 or feeder 24) arranged at one thus at any side of the filter C1 for intercepting the path C (between feeder 24 and filter 6) and a nozzle C3= 63 disposed between the filter C1/6 and the valve C2, ( suitable) for feeding air for combustion to the filter C3.
Though valve/nozzle 63 is used for exhausting air it is also suitable (if connected to an air feed) for feeding air for combustion to the filter.

### SUMMARY OF THE INVENTION

It is, therefore, an object of the invention to solve the aforementioned problems of the conventional techniques and to provide a reverse cleaning regeneration type exhaust emission control device capable of continuously and efficiently conducting the reverse cleaning during the working of the device and a method of regenerating the same.

According to a first aspect of the invention, there is provided a reverse cleaning regeneration type exhaust emission control device comprising two exhaust emission routes communicated with an inlet port of an exhaust emission and comprised of a first path A comprising a filter A1, a valve A2 arranged at a downstream side of the filter A1 for shutting off exhaust emission and a nozzle A3 disposed between the filter A1 and the valve A2 for jetting reverse cleaning air to the filter A1 and a second path B comprising a filter B1, a valve B2 arranged at a downstream side of the filter B1 for shutting off exhaust emission and a nozzle B3 disposed between the filter B1 and the valve B2 for jetting reverse cleaning air to the filter B1, and a third path C arranged at an upstream side of the filters. A1 and B1 separately from the exhaust emission path, the third path C comprising a series connection of a filter C1, and a valve C2, the series connection having two ends, each end connected to the exhaust emission path extending from the inlet port of the exhaust emission, the path further comprising a nozzle C3 disposed between the filter C1 and the valve C2 for feeding air for combustion to the filter C1.

In the reverse cleaning regeneration type exhaust emission control device according to the invention, it is preferable that when the reverse cleaning air is jetted from the nozzle A3 or B3, a greater part of air jetted is fed to the third path C without flowing backward to the inlet port of the exhaust emission, that a guide member for introducing the reverse cleaning air into the path C is arranged on an end face of each of the filters A1 and B1 at its upstream side, that the exhaust emission path from the inlet port of the exhaust emission to the first and second paths A and B is arranged close to the filters A1 and B1, that a size of each of the first path A, second path B and the exhaust emission path is defined so as to suck the exhaust emission into a main stream of the reverse cleaning air, that guide members for introducing the exhaust emission into the first and second paths A and B are arranged on the exhaust emission path, and that a partition member is disposed in the exhaust emission path extending from the inlet port of the exhaust emission.

According to a second aspect of the invention, there is the provision of a method of regenerating a reverse cleaning regeneration type exhaust emission control device comprising two exhaust emission routes communicated with an inlet port of an exhaust emission and comprised of a first path A comprising a filter A1, a valve A2 arranged at a downstream side of the filter A1 for shutting off exhaust emission and a nozzle A3 disposed between the filter A1 and the valve A2 for jetting reverse cleaning air to the filter A1 and a second path B comprising a filter B1, a valve B2 arranged at a downstream side of the filter B1 for shutting off exhaust emission and a nozzle B3 disposed between the filter B1 and the valve B2 for jetting reverse cleaning air to the filter B1, and a third path C arranged at an upstream side of the filters A1 and B1 separately from the inlet port of the exhaust emission and communicating with the two exhaust emission routes and comprising a filter C1, a valve C2 arranged at any side of the filter C1 for intercepting the path and a nozzle C3 disposed between the filter C1 and the valve C2 for feeding air for combustion to the filter C1, which comprises alternately repeating a first regeneration treatment and a second regeneration treatment after the exhaust emission is passed through the filters A1 and B1 at opened state of the valve A2 and B2 to catch particulate from the exhaust emission by the filters A1 and B1, in which the first regeneration treatment comprises jetting the reverse cleaning air from the nozzle A3 at a state of closing the valve A2 and opening the valve C2 to remove the particulate from the filter A1, catching the removed particulate with the filter C1 and then feeding air for combustion from the nozzle C3 at a state of opening the valve A2 and closing the valve C2 to burn out the particulate in the filter C1, and the second regeneration treatment comprises jetting the reverse cleaning air from the nozzle B3 at a state of closing the valve B2 and opening the valve C2 to remove the particulate from the filter B1, catching the removed particulate with the filter C1 and then feeding air for combustion from the nozzle C3 at a state of opening the valve B2 and closing the valve C2 to burn out the particulate in the filter C1.

In the regeneration method, it is favorable that after the flowing of the exhaust emission is stopped to the first and second paths A and B, either the first or second regeneration treatment is completed, or after the flowing of the exhaust emission is started to the first and second paths A and B, either the first or second regeneration treatment is started.

In a preferable embodiment of the second aspect, an amount of the particulate caught is detected by a pressure difference between the upstream side and downstream side of the filter A1 and a pressure difference between the upstream side and the downstream side of the filter B1 and the reverse cleaning is carried out in accordance with the detected value.

In another preferable embodiment of the second aspect, a lower end position of the filter C1 is arranged so as to be equal to or lower than lower end positions of the filters A1 and B1 when the reverse cleaning air is jetted from the nozzle A3 or B3 to remove the particulate from the filter A1 or B1 and flow into the third path C without depositing in the first or second path A or B.

### BRIEF DESCRIPTION OF THE DRAWINGS

The invention will be described with reference to the accompanying drawings, wherein:
Fig. 1 is a diagrammatic view illustrating a steady running state of the conventional reverse cleaning regeneration type exhaust emission control device using two filters;
Fig. 2 is a diagrammatic view illustrating a state of closing a valve located at a downstream side of one of the two filter in the conventional reverse cleaning regeneration type exhaust emission control device;

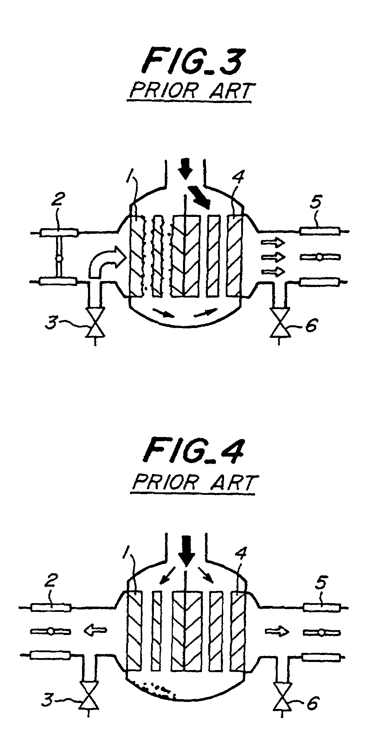

Fig. 3 is a diagrammatic view illustrating a reversed cleaning state in the conventional reverse cleaning regeneration type exhaust emission control device;
Fig. 4 is a diagrammatic view illustrating a state of restarting steady running of the conventional reverse cleaning regeneration type exhaust emission control device;

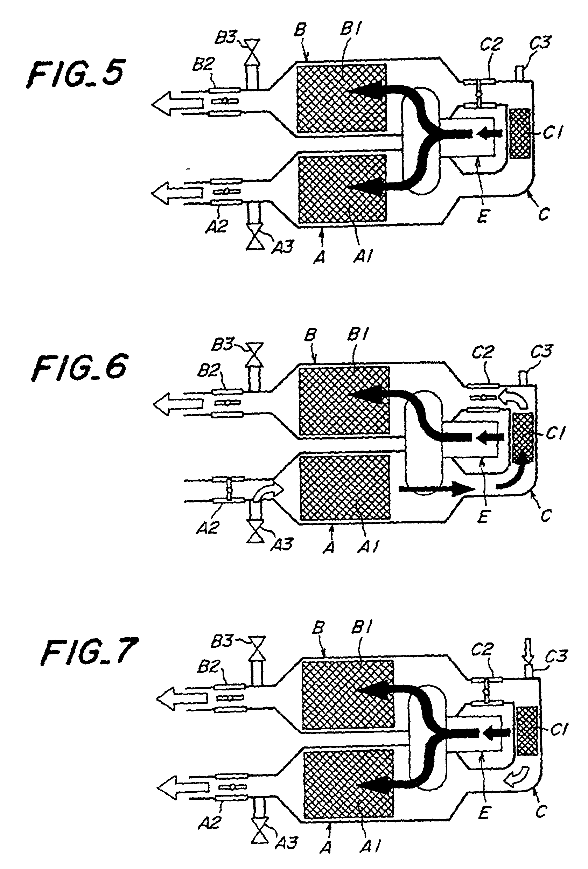

Fig. 5 is a diagrammatic view illustrating a steady running state of a first embodiment of the reverse cleaning regeneration type exhaust emission control device according to the invention;
Fig. 6 is a diagrammatic view illustrating a reverse cleaning state of the first embodiment of the device according to the invention;
Fig. 7 is a diagrammatic view illustrating a regeneration state of a filter C1 at a restarting and steady running state of the first embodiment of the device according to the invention;

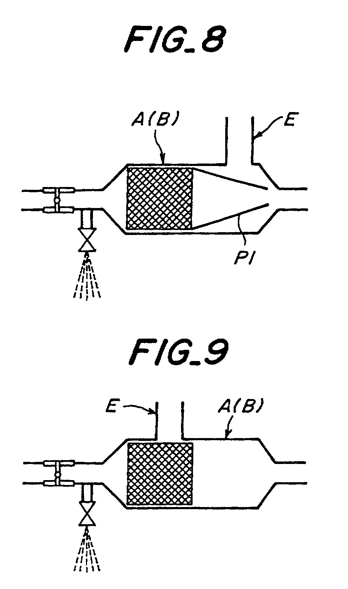

Fig. 8 is a diagrammatically partial view illustrating a first embodiment of the exhaust emission path in the reverse cleaning regeneration type exhaust emission control device according to the invention;
Fig. 9 is a diagrammatically partial view illustrating a second embodiment of the exhaust emission path in the reverse cleaning regeneration type exhaust emission control device according to the invention;

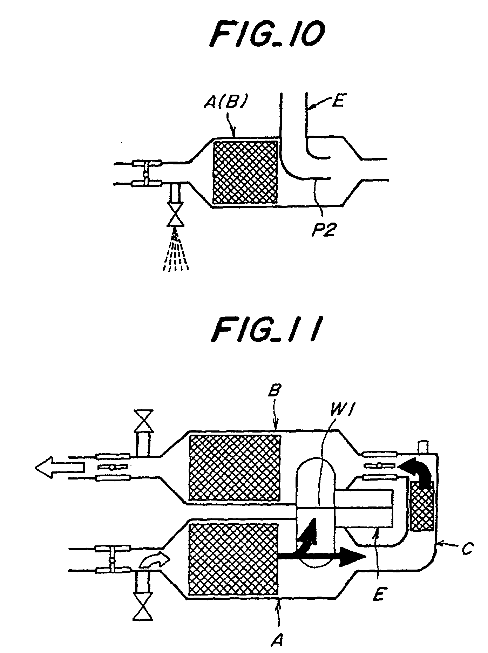

Fig. 10 is a diagrammatically partial view illustrating a third embodiment of the exhaust emission path in the reverse cleaning regeneration type exhaust emission control device according to the invention;

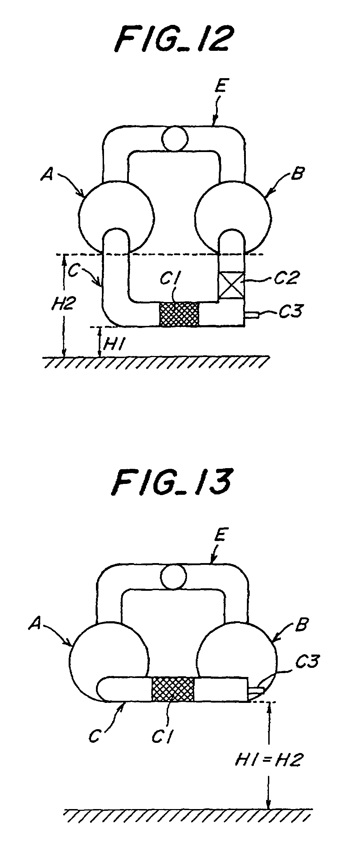

Fig. 11 is a diagrammatic view illustrating a reverse cleaning state of a third embodiment of the reverse cleaning regeneration type exhaust emission control device according to the invention;

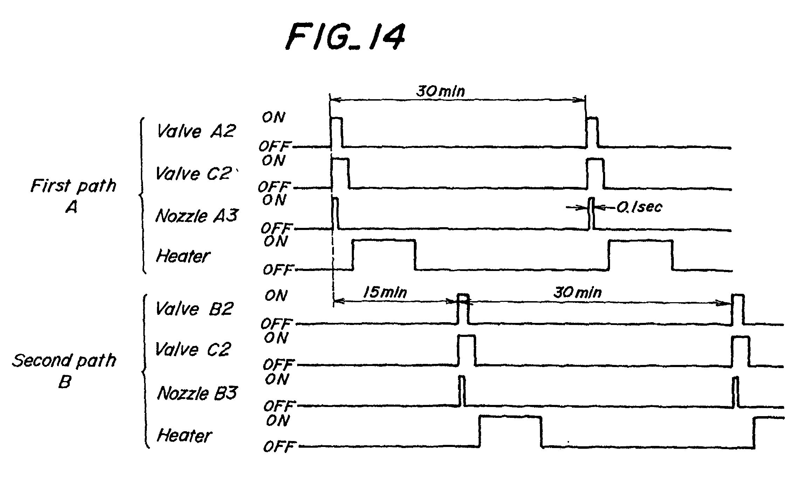

Figs. 12 and 13 are diagrammatically right side views illustrating an arrangement relation of first, second and third paths A, B, C in the reverse cleaning regeneration type exhaust emission control device according to the invention; and
Fig. 14 is a sequence diagram of reverse cleaning in the second embodiment of the device according to the invention.

### DESCRIPTION OF PREFERRED EMBODIMENTS

The reverse cleaning regeneration type exhaust emission control device according to the invention is arranged in an exhaust emission path E connected to an exhaust side of an internal combustion engine, in which the exhaust emission path E is divided into two exhaust emission routs comprised of first path A and second path B in the front of the device and the exhaust emission passed through the paths A and B is discharged from exterior at the back of the device.

The first path A comprises a filter A1, a valve A2 arranged at a downstream side of the filter A1 for shutting off exhaust emission and a nozzle A3 disposed between the filter A1 and the valve A2 for jetting reverse cleaning air to the filter A1, while the second path B comprises a filter B1, a valve B2 arranged at a downstream side of the filter B1 for shutting off exhaust emission and a nozzle B3 disposed between the filter B1 and the valve B2 for jetting reverse cleaning air to the filter B1.

On the other hand, a third path C is arranged at an upstream side of the filters A1 and B1 separately from the exhaust emission path E extending from the inlet port of the exhaust emission so as to communicate with the two exhaust emission routes and comprises a filter C1, a valve C2 arranged at any side of the filter C1 for intercepting the path and a nozzle C3 disposed between the filter C1 and the valve C2 for feeding air for combustion to the filter C3.

In the steady running of the device as shown in Fig. 5, the valves A2 and B2 are at an opening state and the valve C2 is at a closing state, and the exhaust emission is passed through the first and second paths A and B to catch particulate included in the exhaust emission with the filters A1 and B1.

After the particulate is caught with the filters A1 and B1 for a given time, as shown in Fig. 6, the reverse cleaning of the filter A1 is carried out by closing the valve A2 and opening the valve C2 while maintaining the working of the filter B1 at the opened state of the valve B2 and jetting the reverse cleaning air from the nozzle A3 in a moment to remove the particulate from the filter A1 and introduce the removed particulate into the filter C1.

After the reverse cleaning of the filter A1, as shown in Fig. 7, air for combustion is fed from the nozzle C3 at the opened state of the valve A2 and the closed state of the valve C2 to burn out the particulate in the filter C1 by a heating means such as a heater or the like and then air passed through the filter C1 after the removal of the particulate is introduced into the filter A1 together with the exhaust emission.

These procedure is a first regeneration treatment.

On the other hand, after the particulate is caught in the filter B1 for a given time, the reverse cleaning of the filter B1 is carried out by closing the valve B2 and opening the valve C2 while maintaining the working of the filter A1 at the opened state of the valve A2 and jetting the reverse cleaning air from the nozzle B3 in a moment to remove the particulate from the filter B1 and introduce the removed particulate into the filter C1.

After the reverse cleaning of the filter B1, air for combustion is fed from the nozzle C3 at the opened state of the valve B2 and the closed state of the valve C2 to burn out the particulate in the filter C1 by a heating means such as a heater or the like and then air passed through the filter C1 after the removal of the particulate is introduced into the filter B1 together with the exhaust emission.

These procedure is a second regeneration treatment.

In the invention, the first and second regeneration treatments are alternately repeated while continuously working the reverse cleaning regeneration type exhaust emission control device.

In the device according to the invention, the reverse cleaned particulate is caught in the filter C1, so that the contaminated air is not leaked out in the outside of the device and also there is caused no contamination in the filter opposite to the reverse cleaned filter, the nozzle C3 for the assistance of combustion and the like in the device.

In the device according to the invention, the combustion of the particulate is carried out in the filter C1 just after the reverse cleaning while alternately repeating the reverse cleanings of the filters A1 and B1, so that the pressure loss can be maintained at a constant level.

Since the reverse cleaning air is fed in a direction opposite to the direction of the reverse cleaning air fed in the last reverse cleaning, the remaining particulate after the combustion of the filter C1 is blown out from the filter C1 and again caught by the filter A1 or B1 and hence the unburnt particulate is never left in the filter C1.

Since the removed particulate after the reverse cleaning of the filter A1 or B1 is caught by a single filter, the collection efficiency of the particulate is good and also the system using the device can be rendered into a closed system, so that the production of the device is easy and the device itself can be made small.

In the device according to the invention, the flowing of the reverse cleaning air can be controlled only by controlling the opening and closing operations of the valves through a sequencer, so that the back pressure in the exhaust emission path E from the engine is not raised, which is not badly affected upon the operability of the device.

Since the device according to the invention can continuously be worked for a long time, the internal combustion engine itself can be worked for a long time, so that the device can preferably be applied to trucks running over a long distance for a long time, internal combustion engines used in an inside of tunnel or coal mine and the like.

In the reverse cleaning regeneration type exhaust emission control device according to the invention, it is preferable that when the reverse cleaning air is jetted from the nozzle A3 or B3, a greater part of air jetted is fed to the third path C without flowing backward to the inlet port of the exhaust emission. For this purpose, there may be adopted the following means: that is, (1) a guide member for introducing the reverse cleaning air into the path C is arranged on an end face of each of the filters A1 and B1 at its upstream side, (2) the exhaust emission path from the inlet port of the exhaust emission to the first and second paths A and B is arranged close to the filters A1 and B1, (3) a size of each of the first path A, second path B and the exhaust emission path E is defined so as to suck the exhaust emission into a main stream of the reverse cleaning air, (4) guide members for introducing the exhaust emission into the first and second paths A and B are arranged on the inlet port of the exhaust emission, and (5) a partition member is disposed in the exhaust emission path E extending from the inlet port of the exhaust emission.

In case of the item (1), as shown in Fig. 8, a megaphone-shaped cylindrical member P1 tapering toward the third path C is attached to an outer peripheral edge of an end face of each of the filters A1 and B1 at their upstream side, whereby a greater part of the reverse cleaning air jetted from the nozzle A3 or B3 can directly be fed to the third path C without flowing backward into the exhaust emission path E.

In case of the item (2), the exhaust emission path E is closed to the side face of each of the filters A1 and B1 as shown in Fig. 9, or a greater area of the exhaust emission path E is located so as to overlap with the side face of each of the filters A1 and B1 at the upstream side thereof, whereby a greater part of the reverse cleaning air jetted from the nozzle A3 or B3 can be fed to the third path C without flowing backward to the exhaust emission path E.

In case of the item (3), the size of the exhaust emission path E is made considerably smaller than the size of each of the first and second paths A and B so as to sufficiently ensure the volumes of the first and second paths A and B, whereby a greater part of the reverse cleaning air jetted from the nozzle A3 or B3 can be fed to the third path C without flowing backward to the exhaust emission path E.

In case of the item (4), as shown in Fig. 10, a top end portion of the exhaust emission path E is inserted into each of the first and second paths A and B and then bent toward a central portion of the third path C, whereby a greater part of the reverse cleaning air jetted from the nozzle A3 or B3 can be fed to the third path C without flowing backward to the exhaust emission path E.

In case of the item (5), as shown in Fig. 11, a flat plate W1 as a partition member is disposed in the exhaust emission path E extending from the inlet port of the exhaust emission to divide the exhaust emission path E into two equal parts facing the first and second paths A and B. The material of the partition member is not particularly restricted, but is preferably the same as in the wall member constituting the exhaust emission path E. Further, it is sufficient to extend the partition member from the inlet port to a branched port of the exhaust emission path E. In this case, even if the reverse cleaning air is flown backward to the exhaust emission path E, it is obstructed by the partition member W1 to prevent the flowing of the particulate into the opposed-side path, whereby the lowering of the particulate removing ability can be prevented and also the flowing of the reverse cleaning air into the opposed-side path and the exhaust emission path can surely be prevented.

These means may be used alone or in combination in the same reverse cleaning regeneration type exhaust emission control device in accordance with the use purpose.

In the method according to the invention, either the first or second regeneration treatment is completed after the flowing of the exhaust emission to the first and second paths A and B or the working of the internal combustion engine is stopped. On the other hand, either first or second regeneration treatment is again started after subsequent working of the internal combustion engine is started. In the subsequent working of the engine, the flowing of the exhaust emission can be restarted at a state of removing the particulate from the filter C1, whereby the removal of the particulate and the regeneration treatment can efficiently be carried out. If the first or second regeneration treatment is carried out by restarting the flowing of the exhaust emission at a state of leaving the particulate in the filter C1, the particulate left in the filter C1 is fed to the opposed-side filter by the pressure of the reverse cleaning air jetted, so that the efficiency of removing the particulate is degraded and also the pressure loss may be raised. When the regeneration treatment is carried out after the flowing of the exhaust emission is restarted, it is preferable to start the regeneration from the filter not conducting the regeneration treatment at the time of stopping the working of the device.

In any case, it is favorable to start the regeneration treatment after a given time of the start of flowing the exhaust emission such as 60 seconds or the like because power consumption in the start of the internal combustion engine is temporarily increased by actuation of cell motor or the like.

In order to determine the reverse cleaning of the filter A1 or B1, according to the invention, an amount of the particulate caught is detected by a pressure difference between the upstream side and downstream side of the filter A1 and a pressure difference between the upstream side and the downstream side of the filter B1 and the reverse cleaning is carried out in accordance with the detected value. For this purpose, a pressure sensor is arranged at each of the upstream side and downstream side of the filters A1 and B1, respectively.

In order to more ensure the removal of the particulate from the filter A1 or B1 by the reverse cleaning of the filter A1 or B1, according to the invention, it is favorable that a lower end position of the filter C1 is arranged so as to be equal to or lower than lower end positions of the filters A1 and B1 when the reverse cleaning air is jetted from the nozzle A3 or B3 to remove the particulate from the filter A1 or B1 and flow into the third path C without depositing in the first or second path A or B as shown in Figs. 12 and 13. In this case, when the reverse cleaning air is jetted from the nozzle A3 or B3, the particulate removed out from the filter A1 or B1 is surely flowed into the third path C without depositing in the first or second path A or B and caught by the filter C1. Particularly, when the lower end position of the filter C1 is lower than the lower end position of the filter A1 or B1, the particulate falls down into the third path C through gravity, so that the particulate is more efficiently caught by the filter C1.

The following examples are given in illustration of the invention and are not intended as limitations thereof.

### Example 1

There is provided a system using a reverse cleaning regeneration type exhaust emission control device as shown in Figs. 1-3 and the performance of particulate removal thereof is evaluated as follows.

As an internal combustion engine, there is used an engine having a displacement of 7000 cc, in which a driving condition of the engine is 500-1800 rpm.

A reverse cleaning air is jetted from a nozzle A3 or B3 under a pressure of 8 kgf/cm² for 0.1 second.

Each of filters A1 and B1 is a cylindrical silicon carbide honeycomb body having an interstructure thickness of 0.43 mm, pore number of 30 pores/square inch, a length of 150 mm and a filter capacity of 3.3 liter, and a filter C1 is a cylindrical silicon carbide honeycomb body having an interstructure thickness of 0.43 mm, pore number of 30 pores/square inch, a length of 150 mm and a filter capacity of 0.14 liter.

In order to burn out particulate'caught by the filter C1, a heater of 24V-300W is used, while air for combustion is jetted from a nozzle C3 under a pressure of 6.5 kgf/cm².

During the running of the engine, the reverse cleanings of the filters A1 and B1 are alternately carried out while continuously removing the particulate by the reverse cleaning regeneration type exhaust emission control device according to the invention.

The above reverse cleaning is carried out according to a sequence diagram shown in Fig. 14. That is, just after the valve A2 is closed and at the same time the valve C2 is opened, the nozzle A3 is opened to jet the reverse cleaning air therefrom and then the filter C1 is heated to 670°C by means of the heater to burn out the particulate caught by the filter C1. After 15 minutes from the opening of the valve A2, the valve B2 is closed and the valve C2 is opened and then the nozzle B3 is opened immediately to jet the reverse cleaning air therefrom and thereafter the filter C1 is heated to 670°C by means of the heater to burn out the particulate caught by the filter C1. These procedures are alternately repeated.

After the stop of the engine, the regeneration treatment of the filter A1 or B1 is carried out to burn out the particulate caught by the filter C1 while heating the filter C1 to 670°C by means of the heater and then the working of the system using the reverse cleaning regeneration type exhaust emission control device is stopped.

During the working of the device, the pressure loss is not more than 2800 mmH₂O and the operation is stable.

After 1600 minutes of the working, the deposition of the particulate in the paths A and B at the upstream side of the filters A1 and B1 is not substantially observed by visually observing the inside of the path.

### Example 2

The same procedure as in Example 1 is repeated except that a megaphone-shaped cylindrical member P1 tapering toward the third path C is attached to an outer peripheral edge of an end face of each of the filters A1 and B1 at their upstream side as shown in Fig. 8.

When an amount of reverse cleaning air flown into the third path C is Q1 and an amount of reverse cleaning air flown into the exhaust emission path E is Q2, it is confirmed that Q1:Q2 is 10:0.

The pressure loss in the device is not more than 2800 mmH₂O, and the deposition of the particulate in the paths A and B is not substantially observed.

### Example 3

The same procedure as in Example 1 is repeated except that the exhaust emission path E is closed to the side face of each of the filters A1 and B1 as shown in Fig. 9. In this case, it is confirmed that Q1:Q2 is 10:0.

The pressure loss in the device is not more than 4200 mmH₂O and the deposition of the particulate in the paths A and B is not substantially observed.

### Example 4

The same procedure as in Example 1 is repeated except that a greater area of the exhaust emission path E is located so as to overlap with the side face of each of the filters A1 and B1 at the upstream side thereof. In this case, it is confirmed that Q1:Q2 is 8:2.

The pressure loss in the device is not more than 3360 mmH₂O and the deposition of the particulate in the paths A and B is not substantially observed.

### Example 5

The same procedure as in Example 1 is repeated except that a pressure sensor is arranged at each of the upstream side and downstream side of the filters A1 and B1, respectively. In this case, when the value of the pressure difference detected by the pressure sensors is 1500 mmH₂O, the first or second regeneration treatment of the filter A1 or B1 is started.

During the working of the device, the pressure loss in the device is not more than 2800 mmH₂O and the deposition of the particulate in the paths A and B is not substantially observed.

### Example 6

The same procedure as in Example 1 is repeated except that the arrangement relation of the lower end portion among the first, second and third paths A, B and C is H1<H2 as shown in Fig. 12 in which H1 is a height from ground surface to the lower end position of the filer C1 and H2 is a height from ground surface to the lower end position of each of the filters A1 and B1.

During the working of the device, the engine torque does not decrease and the lowering of fuel consumption can be prevented. Further, the pressure loss in the device is not more than 2800 mmH₂O and the deposition of the particulate in the paths A and B is not substantially observed.

### Example 7

The same procedure as in Example 1 is repeated except that the arrangement relation of the lower end portion among the first, second and third paths A, B and C is H1=H2 as shown in Fig. 13.

During the working of the device, the engine torque does not decrease and the lowering of fuel consumption can be prevented. Further, the pressure loss in the device is not more than 2800 mmH₂O and the deposition of the particulate in the paths A and B is not substantially observed.

As mentioned above, according to the invention, the reverse cleaning can continuously and efficiently be carried out by using the reverse cleaning regeneration type exhaust emission control device.

## Claims

1. A reverse cleaning regeneration type exhaust emission control device comprising two exhaust emission routes communicated with an inlet port of an exhaust emission and comprised of a first path A comprising a filter A1, a valve A2 arranged at a downstream side of the filter A1 for shutting off exhaust emission and a nozzle A3 disposed between the filter A1 and the valve A2 for jetting reverse cleaning air to the filter A1 and a second path B comprising a filter B1, a valve B2 arranged at a downstream side of the filter B1 for shutting off exhaust emission and a nozzle B3 disposed between the filter B1 and the valve B2 for jetting reverse cleaning air to the filter B1, and a third path C arranged at an upstream side of the filters A1 and B1 separately from the exhaust emission path, the third path C comprising a series connection of a filter C1, and a valve C2, the series connection having two ends, each end connected to the exhaust emission path extending from the inlet port of the exhaust emission, the path further comprising a nozzle C3 disposed between the filter C1 and the valve C2 for feeding air for combustion to the filter C1.

2. A reverse cleaning regeneration type exhaust emission control device according to claim 1, wherein a guide member for introducing the reverse cleaning air into the path C is arranged on an end face of each of the filters A1 and B1 at its upstream side.

3. A reverse cleaning regeneration type exhaust emission control device according to claim 1, wherein the exhaust emission path from the inlet port of the exhaust emission to the first and second paths A and B is arranged close to the filters A1 and B1.

4. A reverse cleaning regeneration type exhaust emission control device according to claim 1, wherein a size of each of the first path A, second path B and the exhaust emission path is defined so as to suck the exhaust emission into a main stream of the reverse cleaning air.

5. A reverse cleaning regeneration type exhaust emission control device according to claim 1, wherein guide members for introducing the exhaust emission into the first and second paths A and B are arranged on the exhaust emission path.

6. A reverse cleaning regeneration type exhaust emission control device according to claim 1, wherein a partition member is disposed in the exhaust emission path extending from the inlet port of the exhaust emission.

7. A method of regenerating a reverse cleaning regeneration type exhaust emission control device comprising two exhaust emission routes communicated with an inlet port of an exhaust emission and comprised of a first path A comprising a filter A1, a valve A2 arranged at a downstream side of the filter A1 for shutting off exhaust emission and a nozzle A3 disposed between the filter A1 and the valve A2 for jetting reverse cleaning air to the filter A1 and a second path B comprising a filter B1, a valve B2 arranged at a downstream side of the filter B1 for shutting off exhaust emission and a nozzle B3 disposed between the filter B1 and the valve B2 for jetting reverse cleaning air to the filter B1, and a third path C arranged at an upstream side of the filters A1 and B1 separately from the inlet port of the exhaust emission and communicating with the two exhaust emission routes and comprising a filter C1, a valve C2 arranged at any side of the filter C1 for intercepting the path and a nozzle C3 disposed between the filter C1 and the valve C2 for feeding air for combustion to the filter C1, which comprises alternately repeating a first regeneration treatment and a second regeneration treatment after the exhaust emission is passed through the filters A1 and B1 at opened state of the valve A2 and B2 to catch particulate from the exhaust emission by the filters A1 and B1, in which the first regeneration treatment comprises jetting the reverse cleaning air from the nozzle A3 at a state of closing the valve A2 and opening the valve C2 to remove the particulate from the filter A1, catching the removed particulate with the filter C1 and then feeding air for combustion from the nozzle C3 at a state of opening the valve A2 and closing the valve C2 to burn out the particulate in the filter C1, and the second regeneration treatment comprises jetting the reverse cleaning air from the nozzle B3 at a state of closing the valve B2 and opening the valve C2 to remove the particulate from the filter B1, catching the removed particulate with the filter C1 and then feeding air for combustion from the nozzle C3 at a state of opening the valve B2 and closing the valve C2 to burn out the particulate in the filter C1.

8. The method according to claim 7, wherein after the flowing of the exhaust emission is stopped to the first and second paths A and B, either the first or second regeneration treatment is completed, or after the flowing of the exhaust emission is started to the first and second paths A and B, either the first or second regeneration treatment is started.

9. The method according to claim 7, wherein an amount of the particulate caught is detected by a pressure difference between the upstream side and downstream side of the filter A1 and a pressure difference between the upstream side and the downstream side of the filter B1 and the reverse cleaning is carried out in accordance with the detected value.

10. The method according to claim 7, wherein a lower end position of the filter C1 is arranged so as to be equal to or lower than lower end positions of the filters A1 and B1 when the reverse cleaning air is jetted from the nozzle A3 or B3 to remove the particulate from the filter A1 or B1 and flow into the third path C without depositing in the first or second path A or B.

## Patentansprüche

1. Rückspülregenerierungs-Abgasemissionssteuereinrichtung, die zwei Abgasemissionsbahnen umfasst, welche mit einer Einlassöffnung für eine Abgasemission verbunden sind, und die aufweist: einen ersten Weg A, der ein Filter A1, ein Ventil A2, das auf der Abströmseite des Filters A1 zum Absperren der Abgasemission angeordnet ist, und eine Düse A3 enthält, die zwischen dem Filter A1 und dem Ventil A2 zum Abstrahlen von Rückspülluft zum Filter A1 angeordnet ist, und einen zweiten Weg B, der ein Filter B1, ein Ventil B2, das auf der Abströmseite des Filters B1 zum Absperren der Abgasemission angeordnet ist, und eine Düse B3 enthält, die zwischen dem Filter B1 und dem Ventil B2 zum Abstrahlen von Rückspülluft zum Filter B1 angeordnet ist, sowie mit einem dritten Weg C, der an der Zuströmseite der Filter A1 und A2 getrennt vom Abgasemissionsweg angeordnet ist, wobei der dritte Weg C eine Reihenverbindung eines Filters C1 und ein Ventil C2 enthält, die Reihenverbindung zwei Enden aufweist, deren jedes mit dem von der Einlassöffnung der Abgasemission ausgehenden Abgasemissionsweg in Verbindung steht, und wobei der Weg ferner eine Düse C3 enthält, die zwischen dem Filter C1 und dem Ventil C2 zur Zuführung von Verbrennungsluft zum Filter C1 angeordnet ist.

2. Rückspülregenerierungs-Abgasemissionssteuereinrichtung nach Anspruch 1, bei welcher ein Führungsorgan zum Einleiten von Rückspülluft in den Weg C an einer Endfläche jedes Filters A1 und B1 an dessen Zuströmseite angeordnet ist.

3. Rückspülregenerierungs-Abgasemissionssteuereinrichtung nach Anspruch 1, bei welcher der Abgasemissionsweg von der Einlassöffnung der Abgasemission zum ersten und zweiten Weg A und B nahe an den Filtern A1 und B1 angeordnet ist.

4. Rückspülregenerierungs-Abgasemissionssteuereinrichtung nach Anspruch 1, bei welcher die Größen jeweils des ersten Weges A, des zweiten Weges B und des Abgasemissonsweges so festgelegt sind, dass die Abgasemission in eine Hauptströmung der Rückspülluft gesaugt wird.

5. Rückspülregenerierungs-Abgasemissionssteuereinrichtung nach Anspruch 1, bei welcher Führungsorgane zum Einleiten der Abgasemission in den ersten und zweiten Weg A und B am Abgasemissionsweg angeordnet sind.

6. Rückspülregenerierungs-Abgasemissionssteuereinrichtung nach Anspruch 1, bei welcher ein Trennorgan im Abgasemissionsweg angeordnet ist, das von der Einlassöffnung der Abgasemission ausgeht.

7. Verfahren zum Regenerieren einer Rückspülregenerierungs-Abgasemissionssteuereinrichtung, die zwei Abgasemissionsbahnen umfasst, welche mit einer Einlassöffnung für eine Abgasemission verbunden sind, und die besteht aus: einem ersten Weg A, welcher ein Filter A1, ein Ventil A2, das an der Abströmseite des Filters A1 zum Absperren der Abgasemission angeordnet ist, und eine Düse A3 enthält, welche zwischen dem Filter A1 und dem Ventil A2 zum Abstrahlen von Rückspülluft zum Filter A1 angeordnet ist, und einen zweiten Weg B, der ein Filter B1, ein Ventil B2, das auf der Abströmseite des Filters B1 zum Absperren der Abgasemission angeordnet ist, und eine Düse B3 enthält, welche zwischen dem Filter B1 und dem Ventil B2 zum Abstrahlen von Rückspülluft zum Filter B1 angeordnet ist, sowie mit einem dritten Weg C, der an der Zuströmseite der Filter A1 und B1 getrennt von der Einlassöffnung für die Abgasemission angeordnet ist und mit den beiden Abgasemissionsbahnen verbunden ist und ein Filter C1 enhält, wobei ein Ventil C2 an irgendeiner Seite des Filters C1 zum Unterbrechen des Weges angeordnet ist und eine Düse C3 zwischen dem Filter C1 und dem Ventil C2 zum Zuführen von Verbrennungsluft zum Filter C1 angeordnet ist, wobei das Verfahren umfasst: abwechselndes Wiederholen einer ersten Regenerierungsbehandlung und einer zweiten Regenerierungsbehandlung nach dem Durchleiten der Abgasemission durch die Filter A1 und B1 bei geöffnetem Zustand des Ventils A2 und B2, um Teilchen aus der Abgasemission durch die Filter A1 und B1 einzufangen, wobei die erste Regenerierungsbehandlung aus dem Abstrahlen der Rückspülluft von der Düse A3 bei geschlossem Zustand des Ventils A2 und Öffnen des Ventils C2 zum Entfernen der Teilchen vom Filter A1, Einfangen der entfernten Teilchen mit dem Filter C1 und sodann Zuführen von Verbrennungsluft von der Düse C3 bei geöffnetem Zustand des Ventils A2 und Schließen des Ventils C2 zum Ausbrennen der Teilchen im Filter C1 besteht, und die zweite Regenerierungsbehandlung aus dem Abstrahlen von Rückspülluft von der Düse B3 bei geschlossenem Zustand des Ventils B2 und Öffnen des Ventils C2 zur Beseitigung der Teilchen vom Filter B1, dem Einfangen der entfernten Teilchen mit dem Filter C1 und sodann dem Zuführen von Verbrennungsluft aus der Düse C3 bei geöffnetem Zustand des Ventils B2 und Schließen des Ventils C2 zum Ausbrennen der Teilchen im Filter C1 besteht.

8. Verfahren nach Anspruch 7, bei welchem nach dem Stoppen der Strömung der Abgasemission zum ersten und zweiten Weg A und B entweder die erste oder zweite Regenerierungsbehandlung beendet wird, oder nach dem Start der Strömung der Abgasemission zum ersten und zweiten Weg A und B entweder die erste oder zweite Regenerierungsbehandlung gestartet wird.

9. Verfahren nach Anspruch 7, bei welchem die Menge der eingefangenen Teilchen durch eine Druckdifferenz zwischen der Zuströmseite und der Abströmseite des Filters A1 und der Druckdifferenz zwischen der Zuströmseite und der Abströmseite des Filters B1 erfasst und die Rückspülung entsprechend dem erfassten Wert durchgeführt wird.

10. Verfahren nach Anspruch 7, bei welchem eine untere Endstellung des Filters C1 so angeordnet wird, dass sie gleich oder niedriger liegt als die unteren Endstellungen der Filter A1 und B1, wenn die Rückspülluft von der Düse A3 oder B3 abgestrahlt wird, um die Teilchen vom Filter A1 oder B1 zu entfernen und in den dritten Weg C ohne Niederschlagung im ersten oder zweiten Weg A oder B strömen zu lassen.

## Revendications

1. Dispositif de commande d'émission d'échappement de type à régénération par lavage à contre-courant comprenant deux itinéraires d'émission d'échappement communiquant avec un orifice d'entrée d'une émission d'échappement et constitués d'un premier trajet A comprenant un filtre A1, une soupape A2, agencée du côté aval du filtre A1, pour couper une émission d'échappement, et une buse A3, disposée entre le filtre A1 et la soupape A2, pour projeter de l'air de lavage à contre-courant vers le filtre A1, et d'un deuxième trajet B comprenant un filtre B1, une soupape B2, agencée du côté aval du filtre B1, pour couper une émission d'échappement, et une buse B3, disposée entre le filtre B1 et la soupape B2, pour projeter de l'air de lavage à contre-courant vers le filtre B1, et d'un troisième trajet C, agencé du côté amont des filtres A1 et B1 séparément du trajet d'émission d'échappement, le troisième trajet C comprenant un montage série d'un filtre C1 et d'une soupape C2, le montage série comportant deux extrémités, chaque extrémité étant connectée au trajet d'émission d'échappement s'étendant depuis l'orifice d'entrée de l'émission d'échappement, le trajet comprenant en outre un buse C3, disposée entre le filtre C1 et la soupape C2, pour amener de l'air de combustion vers le filtre C1.

2. Dispositif de commande d'émission d'échappement de type à régénération par lavage à contre-courant selon la revendication 1, dans lequel un élément de guidage, pour introduire l'air de lavage à contre-courant dans le trajet C, est agencé sur une face d'extrémité, du côté amont, de chacun des filtres A1 et B1

3. Dispositif de commande d'émission d'échappement de type à régénération par lavage à contre-courant selon la revendication 1, dans lequel le trajet d'émission d'échappement de l'orifice d'entrée de l'émission d'échappement aux premier et deuxième trajets A et B est agencé à proximité des filtres A1 et B1.

4. Dispositif de commande d'émission d'échappement de type à régénération par lavage à contre-courant selon la revendication 1, dans lequel la taille de chacun du premier trajet A, du deuxième trajet B et du trajet d'émission d'échappement est définie de façon à aspirer l'émission d'échappement dans un flux principal de l'air de lavage à contre-courant.

5. Dispositif de commande d'émission d'échappement de type à régénération par lavage à contre-courant selon la revendication 1, dans lequel des éléments de guidage, servant à introduire l'émission d'échappement dans les premier et deuxième trajets A et B, sont agencés sur le trajet d'émission d'échappement.

6. Dispositif de commande d'émission d'échappement de type à régénération par lavage à contre-courant selon la revendication 1, dans lequel un élément formant cloison est disposé dans le trajet d'émission d'échappement s'étendant depuis l'orifice d'entrée de l'émission d'échappement.

7. Procédé de régénération d'un dispositif de commande d'émission d'échappement de type à régénération par lavage à contre-courant comprenant deux itinéraires d'émission d'échappement communiquant avec un orifice d'entrée d'une émission d'échappement et constitués d'un premier trajet A comprenant un filtre A1, une soupape A2, agencée du côté aval du filtre A1, destinée à couper une émission d'échappement, et une buse A3, disposée entre le filtre A1 et la soupape A2, destinée à projeter de l'air de lavage à contre-courant vers le filtre A1, et d'un deuxième trajet B comprenant un filtre B1, une soupape B2, agencée du côté aval du filtre B1, destinée à couper une émission d'échappement, et une buse B3, disposée entre le filtre B1 et la soupape B2, destinée à projeter de l'air de lavage à contre-courant vers le filtre B1, et d'un troisième trajet C, agencé du côté amont des filtres A1 et B1 séparément de l'orifice d'entrée de l'émission d'échappement et communiquant avec les deux itinéraires d'émission d'échappement et comprenant un filtre C1, une soupape C2, agencée d'un côté ou de l'autre du filtre C1, destinée à couper le trajet, et une buse C3, disposée entre le filtre C1 et la soupape C2, destinée à amener de l'air de combustion vers le filtre C1, qui comprend la répétition, en alternance, d'un premier traitement de régénération et d'un second traitement de régénération après le passage, de l'émission d'échappement, par les filtres A1 et B1 lors d'un état ouvert des soupapes A2 et B2 pour capter des particules provenant de l'émission d'échappement à l'aide des filtres A1 et B1, dans lequel le premier traitement de régénération comprend la projection de l'air de lavage à contre-courant à partir de la buse A3, lors d'un état de fermeture de la soupape A2 et d'ouverture de la soupape C2, pour retirer les particules du filtre A1, le captage des particules retirées du filtre C1 et puis l'alimentation en air de combustion à partir de la buse C3, lors d'un état d'ouverture de la soupape A2 et de fermeture de la soupape C2, pour brûler les particules qui se trouvent dans le filtre C1, et le second traitement de régénération comprend la projection de l'air de lavage à contre-courant à partir de la buse B3, lors d'un état de fermeture de la soupape B2 et d'ouverture de la soupape C2 pour retirer les particules du filtre B1, le captage des particules retirées à l'aide du filtre C1 et puis l'alimentation en air de combustion à partir de la buse C3, lors d'un état d'ouverture de la soupape B2 et de fermeture de la soupape C2, pour brûler les particules qui se trouvent dans le filtre C1.

8. Procédé selon la revendication 7, dans lequel, après arrêt de l'écoulement de l'émission d'échappement vers les premier et deuxième trajets A et B, l'un ou l'autre des premier ou second traitements de régénération est terminé, ou bien, après le début de l'écoulement de l'émission d'échappement vers les premier et deuxième trajets A et B, l'un ou l'autre des premier ou second traitements de régénération commence.

9. Procédé selon la revendication 7, dans lequel une certaine quantité de particules retenues est détectée par une différence de pression entre le côté amont et le côté aval du filtre A1 et une différence de pression entre le côté amont et le côté aval du filtre B1, et dans lequel le lavage à contre-courant est effectué en fonction de la valeur détectée.

10. Procédé selon la revendication 7, dans lequel une position d'extrémité inférieure du filtre C1 est agencée pour être égale, ou inférieure, à des positions d'extrémité inférieure des filtres A1 et B1 lorsque l'air de lavage à contre-courant est projeté à partir de la buse A3 ou B3 pour retirer les particules du filtre A1 ou B1 et écoulement dans le troisième trajet C sans dépôt dans le premier ou deuxième trajet A ou B.
